# EUROPEAN PATENT APPLICATION

(11) **EP 4 726 564 A1**
(43) Date of publication of application: **15.04.2026**
(21) Application number: 25204535.6
(22) Date of filing: 25.09.2025
(51) Int. Cl.: G06F 15/78

(54) **SHARED ROUTING AND SENSING IN A MULTI-TILE DIGITAL IN-MEMORY COMPUTATION (DIMC) NEURAL PROCESSING UNIT (NPU)**

(30) Priority: 10.10.2024 US 202463705746 P; 17.09.2025 US 202519331503
(71) Applicant: STMicroelectronics International N.V., 1228 Plan-les-Ouates, Geneva (CH)
(72) Inventor: CHAWLA, Nitin, 201304 Noida (IN); AYODHYAWASI, Manuj, 201304 Noida (IN); RAWAT, Harsh, 121006 Faridabad (IN); CHELANI, Vikas, 201301 Noida (IN)
(74) Representative: Casalonga

(57) **Abstract**

A first in-memory computation (IMC) circuit includes a first IMC processing tile coupled for data communication to a first interface circuit. A second IMC circuit includes a second IMC processing tile coupled for data communication to a second interface circuit. A shared resource bus connects the first and second interface circuits for data communication of feature data, weight data or input computation data.

## Description

### CROSS REFERENCE TO RELATED APPLICATIONS

This application claims priority to United States Provisional Application for Patent No. 63/705,746, filed October 10, 2024, the content of which is incorporated herein by reference.

### TECHNICAL FIELD

Embodiments herein relate to a neural processing unit (NPU) utilizing multiple interconnected digital in-memory computation (DIMC) processing tiles.

### BACKGROUND

Data communication between digital in-memory computation (DIMC) tiles is a critical concern within a neural processing unit (NPU). The data passed between DIMC tiles can include feature data, weight data and computation data (such as sum and partial sum, partial product and/or partial compute data). Significant routing resources are needed in support of high bandwidth operations.

There is a need in the art for a more efficient data communications interconnection between DIMC processing tiles.

### SUMMARY

In an embodiment, a circuit comprises: a first in-memory computation (IMC) circuit comprising a first IMC processing tile coupled for data communication to a first interface circuit; a second IMC circuit comprising a second IMC processing tile coupled for data communication to a second interface circuit; and a shared resource bus connecting the first interface circuit to the second interface circuit to support data communications among and between the first and second IMC processing tiles.

The data communications over the shared resource bus include transmission of feature data for in-memory computation operations provided to the first and second IMC processing tiles.

The data communications over the shared resource bus include transmission of weight data for in-memory computation operations provided to the first and second IMC processing tiles.

The data communications over the shared resource bus include transmission of output computation data generated by execution of the in-memory computation operation by one of the first and second IMC processing tiles and provided as input computation data to the other of the first and second IMC processing tiles.

### BRIEF DESCRIPTION OF THE DRAWINGS

For a better understanding of the embodiments, reference will now be made by way of example only to the accompanying figures in which:
Figure 1A is a block diagram of a multi-island in-memory computation (IMC) neural processing unit (NPU);
Figure 1B is a block diagram for an individual IMC NPU island including a plurality of IMC tile clusters;
Figure 1C is a block diagram of an IMC tile cluster including a plurality of digital in-memory computation (DIMC) circuits;
Figure 1D is a block diagram of an embodiment for the DIMC circuit;
Figure 2 is a more detailed diagram of the DIMC circuit;
Figure 3 shows a tile cluster configuration supporting IMC tiles with decompressor logic and shared compute logic;
Figure 4 which shows a schematic diagram of an example implementation for the DIMC processing tile; and
Figures 5A-5B which illustrate neural network graph schedules for in-memory computation operations utilizing shared resource bus interconnections among DIMC circuits.

### DETAILED DESCRIPTION OF THE DRAWINGS

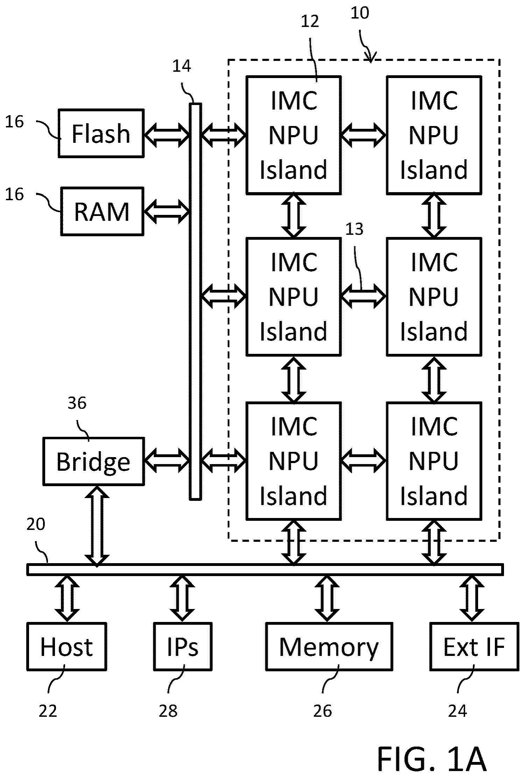

Reference is now made to Figure 1A which shows a processing system block diagram where the system includes a multi-island in-memory computation (IMC) neural processing unit (NPU) 10. The multi-island IMC NPU 10 includes a plurality of IMC NPU islands 12 arranged in an array and interconnected with each other by a data interconnection network 13. The plurality of IMC NPU islands 12 of the multi-island IMC NPU 10 are further connected through a memory bus 14 to memory circuits 16 (comprising, for example, a flash memory, or a random access memory (RAM)). The data stored in the memory circuits 16 include the computational weights of a network. Before the in-memory computation is executed, the weights of a processing layer whose computation is going to be performed are transferred to a digital IMC tile (to be discussed in detail below) within a given IMC NPU island 12. The system RAM can also store the sum and partial sum, partial product and/or partial compute outputs coming out of the IMC tiles of the IMC NPU islands 12 which are going to be used in next processing layer computations. The plurality of IMC NPU islands 12 are further coupled through a system bus 20 to a host processing unit 22 and an external interface (IF) circuit 24. The host processing unit 22 (also referred to as the central processing unit (CPU)) is responsible for executing instructions from programs and managing the overall operation of the system. It coordinates the activities of all other hardware components and ensuring that tasks are carried out efficiently. A data storage memory 26 is also coupled to the system bus 20 for access by the host processing unit 22. The data storage memory 26 can store programming and application data needed by the host processor. One or more functional (IP) circuits 28 are further connected to the system bus 20. The functional (IP) circuits can be any intellectual property circuit or block which is used in the system. Examples of such include: a direct memory access (DMA) circuit, a serial peripheral interface (SPI) circuit, a universal asynchronous receiver-transmitter (UART) circuit, a universal serial bus (USB) circuit, a clock and reset generator circuit, a top level register interface circuit, data convertor circuits, etc. A data bridge circuit 36 interconnects the system bus 20 and the memory bus 14 in support of data communications therebetween.

To summarize, the Neural Processing Unit (NPU) is an accelerator designed to enhance the performance of neural processing tasks. Within the system, it communicates with various components, including the system and external memory, to retrieve weights and store sums or partial sums, partial products and/or partial computes. Additionally, it interacts with different sensor functional (IP) circuits and memories to obtain input features.

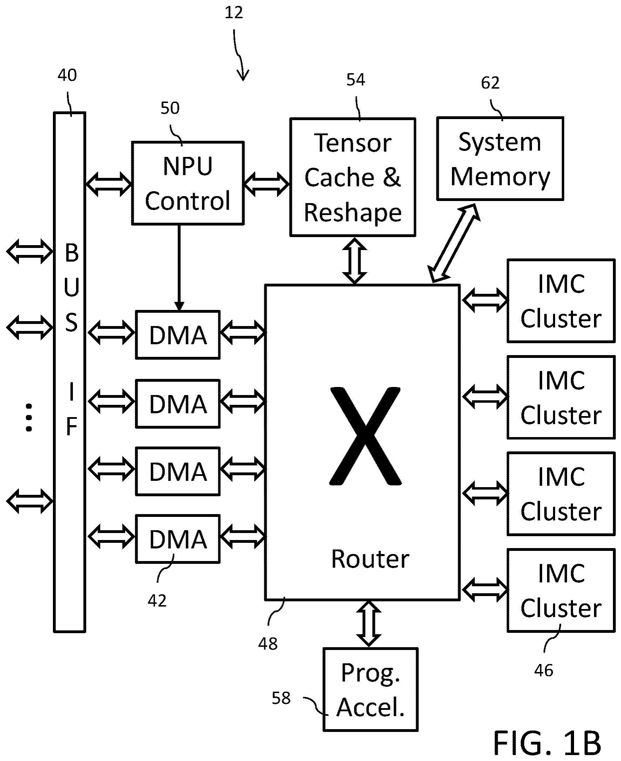

Reference is now made to Figure 1B which shows a block diagram for an individual IMC NPU island 12. Each IMC NPU island 12 includes a bus interface 40 for supporting connection of the island 12 to one or the other or both of the system bus 20 and the memory bus 14. A plurality of direct memory access (DMA) circuits 42 are connected to the bus interface 40. The DMA circuits 42 function as data movers, and operate to move data from one memory to another memory. In this case, the DMA circuits 42 are used to transfer the data from External Flash/Non-Volatile Memory to System memory or System memory to IMC memory and IMC Outputs to System Memory. A plurality of IMC tile clusters 46 are interconnected to the DMA circuits 42 through a local router circuit 48. A control circuit 50 for NPU operations is connected to the bus interface 40 and to the DMA circuits 42. The NPU control circuit 50 controls the different modules of the NPU subsystem. All the NPU programming registers are part of the NPU control. A tensor cache and reshaping circuit 54 is coupled to the local router circuit 48. The tensor cache and reshaping module 54 functions to reshape the input features and weights as required by the DIMC tiles for computation. A program accelerator circuit 58 is coupled to the local router circuit 48 and is configured to perform various scalar operations within the NPU. A system non-volatile memory circuit 62 is also coupled to the local router circuit 48. This memory circuit 62 is configured to store weight data for the in-memory computation operations, with this weight data being selectively accessed and delivered through the local router circuit 48 to the IMC tile clusters 46.

To summarize, the IMC NPU island 12 comprises a collection of (for example, one or more) IMC tile clusters 46. This IMC NPU island 12 features a control circuit 50 that manages the NPU, a data reshaping block 54 to adjust input data for the IMC clusters, data movers 42 to facilitate data transfer, and accelerators 58 to perform various scalar operations within the NPU. All these different blocks coordinate and communicate with each other via the local router circuit 48.

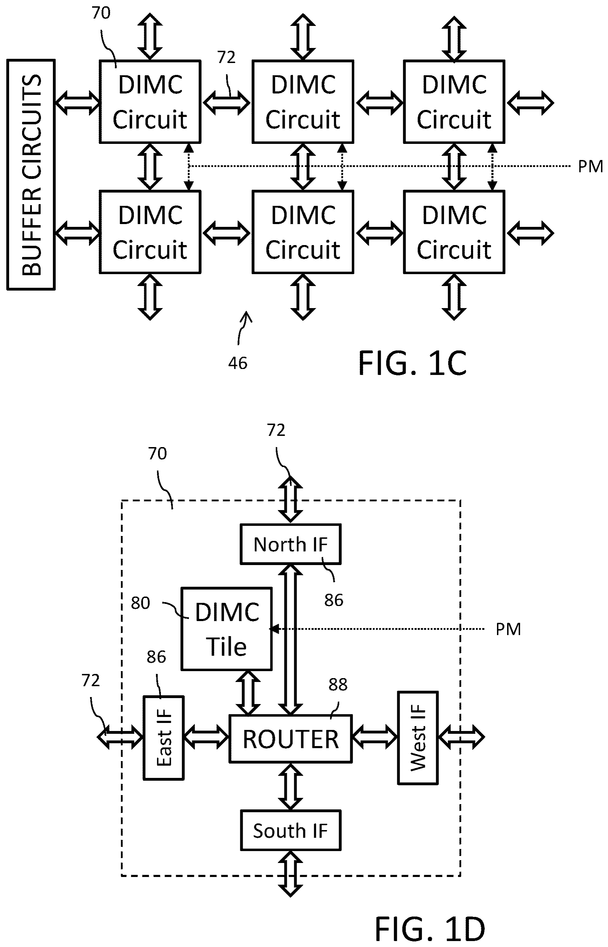

Reference is now made to Figure 1C which shows a block diagram of an IMC tile cluster 46. Each tile cluster 46 includes a plurality of digital in-memory computation operation (DIMC) circuits 70 arranged in an array. Adjacent circuits 70 are interconnected for data communication over a shared resource bus 72. The tile cluster 46 is connected to the router 48 of the IMC NPU island 12. The arrangement of the DIMC circuits 70 can be programmed depending on processing requirement so that a certain DIMC circuit 70 is connected to the router 48 of the IMC NPU island 12. The connection between the tile cluster 46 and the router 48 is facilitated through a set of buffer circuits (Figure 1C shows an example) which are part of the tile cluster 46. The shared resource bus 72 may be used by the DIMC circuits 70 for the purpose of communicating, from one circuit 70 to an adjacent circuit 70, feature data, weight data and/or computation data (such as sum and partial sum, partial product and/or partial compute data).

An advantage of using a shared resource bus 72 is that separate buses or communications links need not be provided to carry different types of data (such as feature data, weight data and/or computation data). There is also support for shared compute resources between two or more DIMC circuits 70. This also facilitates having certain DIMC circuits 70 within a given tile cluster 46 be configured to have certain computation logic and/or decompressor logic that is shared for use, in a time-shared manner, by all DIMC circuits 70 within the tile cluster 46. The decompressor logic within the certain DIMC circuit 70 can be used to process compressed computation weights stored in the processing tile memory to access and output decompressed weight data to other DIMC circuits 70 within the tile cluster 46. The presence of structured and unstructured sparsity in both weight data and feature data gives the opportunity of compressing the data and using the processing tiles of the DIMC circuits 70 in a dense manner. The inclusion of decompressor logic can be costly, and thus providing a solution where decompressor logic is shared across tiles presents a significant advantage.

The foregoing implementation thus supports a compressed data storage as well as a decompressed computation. Compute resources can be shared by many DIMC circuits 70 in sparse mode.

One or more side band communications channels may be provided connecting to the DIMC circuits 70 of the IMC tile cluster 46. One example of such a side band communications channel is a power management (PM) channel wherein power management control signaling is communicated over the side band communications channel. The granularity of the power management control function is on a per tile basis. Thus, the system may exercise independent power management control, for example specifying active mode, sleep mode, data retention mode, etc., for each DIMC circuit 70 through the power management control signaling.

The IMC tile cluster 46 thus comprises one or more DIMC circuits 70. Within a cluster, these DIMC circuits 70 can be utilized independently or linked in various configurations to handle any neural network workload.

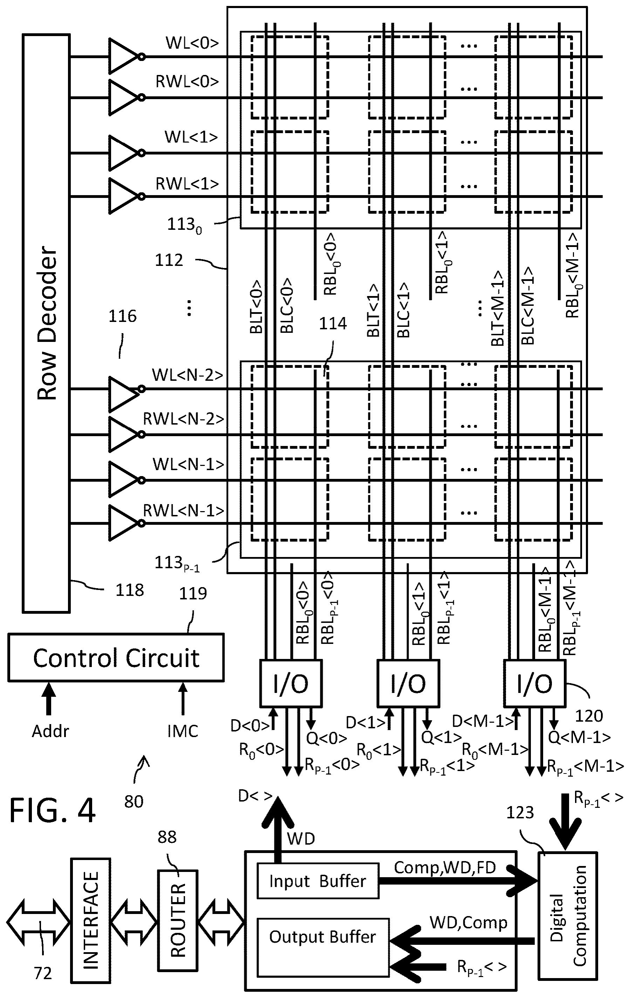

Figure 1D shows a block diagram of an embodiment for the DIMC circuit 70. Each DIMC circuit 70 includes a DIMC processing tile 80. The tile 80 is configured for performing a digital in-memory computation (DIMC) operation based on stored weight data and received feature data. An example of such a DIMC processing tile is shown in United States Patent Application Publication No. 2024/0071439 (incorporated herein by reference; see also an example in Figure 4). This DIMC processing tile 80 can include computation logic which provides a processing resource that can be shared by the processing tiles 80 of other DIMC circuits 70. This DIMC processing tile 80 can include decompressor logic which provides a further processing resource relating to decompressing stored weight data that can be shared by the processing tiles 80 of other DIMC circuits 70.

Power management control signaling (PM) is received by the DIMC processing tile 80 over the side band communications channel to selectively control operational mode (for example, active mode, sleep mode, data retention mode, etc.) of the DIMC processing tile 80.

Each DIMC circuit 70 is coupled to the shared resource bus 72 through an interface circuit (IF) 86 for engaging in data communications with an adjacent DIMC circuit 70 (through its corresponding interface circuit 86). In the example arrayed configuration of the tile cluster 46, there is an interface circuit 86 associated with each Cardinal compass direction (north, south, east, west). The DIMC processing tile 80 for that DIMC circuit 70 is coupled for data communication to a given one of the interface circuits 86 through a router circuit 88. In an example embodiment, the router circuit 88 may be implemented using a packet switched network or a circuit switched network. Only those DIMC processing tiles 80 which are participating in a given functional operation (such as data transfer and processing) are controlled by the power management control signaling in active mode.

Each DIMC processing tile 80 is coupled to the router circuit 88 to receive feature data of the in-memory computation operation being performed. That feature data may, for example, be communicated to the DIMC processing tile 80 via the router 48 of the IMC NPU island 12 over the shared resource buses 72 which interconnect IMC processing tiles 80 and the router 88. Each DIMC processing tile 80 is also coupled to the router circuit 88 to receive weight data of the in-memory computation operation being performed. That weight data may, for example, be communicated to the DIMC processing tile 80 via the router 48 of the IMC NPU island 12 (for example, being retrieved from the ePCM memory 62) over the shared resource buses 72 which interconnect IMC processing tiles 80 and the router 88. The DIMC processing tile 80 may also be a source of weight data (compressed or uncompressed) that is communicated via the router circuit 88 for transmission over the shared resource buses 72 to other IMC processing tiles 80. Additionally, each DIMC processing tile 80 is coupled to the router circuit 88 to output processing data (for example, sum and partial sum, partial product and/or partial compute outputs) of the in-memory computation operation being performed. That processing data may, for example, be communication from the DIMC processing tile 80 over the shared resource buses 72 which interconnect DIMC processing tiles 80 and the router 88. The DIMC processing tile 80 may further receive input processing data (for example, sum and partial sum, partial product and/or partial compute outputs) of the in-memory computation operation being performed from other DIMC processing tiles 80 via the router circuit 88 as transmitted over the shared resource buses 72.

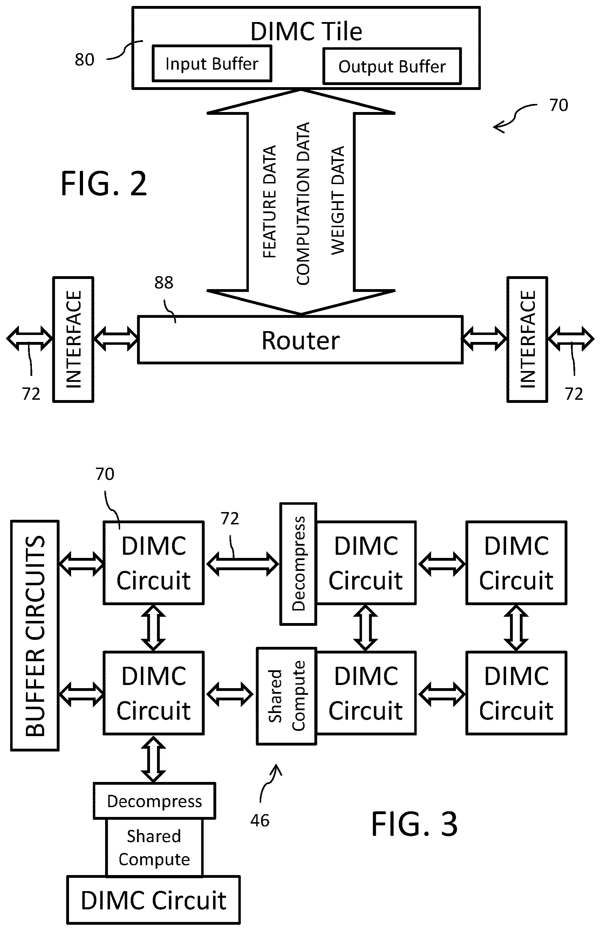

Reference is now made to Figure 2 which shows a more detailed block diagram of the DIMC circuit 70.

The DIMC processing tile 80 includes data buffer circuits configured to buffer data with respect to communication through the router 88 and over the shared resource bus 72. Input buffer circuits can hold weight data, feature data and/or computation data which has been received over the shared resource bus 72 through the interface 86 and routed by router 88 to the DIMC processing tile 80. Output buffer circuits can hold weight data, feature data and/or computation data generated by the DIMC processing tile 80 to be routed by the router 88 and transmitted through the interface 86 over the shared resource bus 72.

This allows feature data, for example, to be broadcast over the shared resource bus 72 for input to the DIMC processing tiles 80 of multiple DIMC circuits 70. This is important, for example, in support of in-memory computation operations where the same feature data is applied in the computation against different sets of weight data stored in different DIMC circuits 70. In this context, the power management control signaling transmitted over the side band communications channel can specifically select the DIMC processing tiles 80 of the multiple DIMC circuits 70 which are to receive the feature data to be an operating mode to access the shared resource bus 72 and use their input buffer circuits, functioning as feature buffers, to receive the broadcast feature data. In an alternative implementation, the feature data may pass from the shared resource bus 72 directly for use by the DIMC processing tile 80 without need for handing by a buffer circuit.

This allows weight data to be read from the DIMC processing tile 80 of one DIMC circuit 70 and communicated to the DIMC processing tiles 80 of multiple DIMC circuits 70. In this context, the power management control signaling transmitted over the side band communications channel can specifically select the source DIMC processing tile 80 of one DIMC circuit 70 providing the weight data to be an operating mode where the output buffer circuit, functioning as a weight buffer, outputs the weight data to the shared resource bus 72 and specifically select the destination DIMC processing tile(s) 80 of DIMC circuit(s) 70 receiving the weight data to be an operating mode where their input buffer circuits, functioning as weight buffers, receives the transmitted weight data. In an alternative implementation, the weight data may pass from the shared resource bus 72 directly for use by the DIMC processing tile 80 without need for handing by a buffer circuit.

This also allows computation data generated by the in-memory computation operation performed by the DIMC processing tile 80 of one DIMC circuit 70 to be communicated for further processing by the DIMC processing tile 80 of another DIMC circuit 70. In this context, the power management control signaling transmitted over the side band communications channel can specifically select the source DIMC processing tile 80 of one DIMC circuit 70 providing the computation data to be an operating mode where the output buffer circuit, functioning as a partial sum or partial product buffer, outputs the computation data to the shared resource bus 72 and specifically select the destination DIMC processing tile(s) 80 of DIMC circuit(s) 70 receiving the computation data to be an operating mode where their input buffer circuits, functioning as partial sum or partial product buffers, receives the transmitted computation data. In an alternative implementation, the computation data may pass from the shared resource bus 72 directly for use by the DIMC processing tile 80 without need for handing by a buffer circuit.

Reference is now made to Figure 3 which shows a configuration of the tile cluster 46 where certain ones of the DIMC circuits 70 within the tile cluster 46 include decompressor logic and certain ones of the DIMC circuits 70 within the tile cluster 46 include shared compute logic. It will be understood that a given DIMC circuit 70 may include both decompressor logic and shared compute logic. With DIMC circuits 70 having DIMC processing tiles 80, the shared resource bus 72 can be used for communicating weights and partial computation results (for example, sum and partial sum, partial product and/or partial compute) among a plurality of IMC circuits 70 using the shared resource bus 72. The shared compute logic is made available on a time-shared basis to the DIMC circuits 70 with the weight and partial computation data being transmitted over the bus 72. Compressed weight data can also be stored in the DIMC processing tile 80 of a given DIMC circuit 70, retrieved from the memory for processing in the decompressor logic, and then the decompressed weight data can be delivered over the shared resource bus 72 for computation use in the DIMC processing tiles 80 of other DIMC circuits 70 in the tile cluster 46. Additionally, feature data can be received by the tile cluster 46 (for example, through the buffer circuit connection to the router 48 (Figure 1B) and delivered over the shared resource bus 72 to the DIMC processing tiles 80 of one or more DIMC circuits 70.

As noted above, the router circuit 88 may be implemented using a packet switched network or a circuit switched network. In a packet switched network implementation, the data to be communicated over the shared resource bus 72 are multiplexed as data packets on the shared resource bus 72 at different time intervals within a system clock period. Control logic specifies packet access at a given time interval for the data communication. In a circuit switched network, tristate buffers drive the signal lines of the shared resource bus 72 at different time intervals within a system clock period. Control logic circuit specifies access at a given time interval for the data communication.

Reference is now made to Figure 4 which shows a schematic diagram of an example implementation for the DIMC processing tile 80. See, also, United States Patent Application Publication No. 2024/0071439 incorporated herein by reference. The DIMC processing tile 80 is implemented using a memory circuit which includes a static random access memory (SRAM) array 112 formed by a plurality of SRAM memory cells 114 arranged in a matrix format having N rows and M columns. Each memory cell 114 is programmed to store a bit of data. In digital in-memory computation processing, the stored data in the memory array 112 comprises computational weight or kernel data for a digital in-memory compute operation. In this context, the digital in-memory compute operation is understood to be a form of a high dimensional Matrix Vector Multiplication (MVM) supporting multi-bit weights that are stored in multiple bit cells of the memory. The group of bit cells (in the case of a multibit weight) can be considered as a virtual synaptic element. Each bit of data stored in the memory array, whether user data or weight data, has either a logic "1" or a logic "0" value.

Each SRAM memory cell 114 may comprise a 6T-type memory cell. The cell 114 may comprise two cross-coupled CMOS inverters whose inputs and outputs are coupled to form a latch circuit having a true data storage node and a complement data storage node which store complementary logic states of the stored data bit. The cell 114 further includes two transfer (passgate) transistors whose gate terminals are driven by a word line WL and whose source-drain paths couple between the true data storage node and a node associated with a true bit line BLT and coupled between the complement data storage node and a node associated with a complement bit line BLC.

Alternatively, each SRAM memory cell 114 may comprise an 8T-type memory cell. The cell 114 may comprise two cross-coupled CMOS inverters whose inputs and outputs are coupled to form a latch circuit having a true data storage node and a complement data storage node which store complementary logic states of the stored data bit. The cell 114 further includes two transfer (passgate) transistors whose gate terminals are driven by a word line WL and whose source-drain paths couple between the true data storage node and a node associated with a true bit line BLT and coupled between the complement data storage node and a node associated with a complement bit line BLC. A signal path between the read bit line RBL and a reference voltage reference forms a read circuit with a read transistor that is gate controlled by the signal at the complement storage node QC and selected by a read word line RWL.

It will be understood that the DIMC processing tile 80 may instead use a different type of memory cell, for example, any form of a bit cell, storage element or synaptic element producing a deterministic readout arranged in an array. As a non-limiting example, consideration is made for the use of a non-volatile memory (NVM) cell such as, for example, magnetoresistive RAM (MRAM) cell, Flash memory cell, phase change memory (PCM) cell or resistive RAM (RRAM) cell). In the following discussion, focus is made on the implementation using an 8T-type SRAM cell 114, but this is done by way of a non-limiting example, understanding that any suitable memory element could be used (e.g., a binary (two level) storage element or an m-ary (multi-level) storage element).

Each cell 114 includes a word line WL, a pair of complementary bit lines BLT and BLC, a read word line RWL and a read bit line RBL. The SRAM memory cells in a common row of the matrix are connected to each other through a common word line WL and through a common read word line RWL. Each of the word lines (WL and/or RWL) is driven by a word line driver circuit 116 with a word line signal generated by a row decoder circuit 118 during read and write operations. The SRAM memory cells in a common column of the matrix across the whole array 112 are connected to each other through a common pair of complementary (write) bit lines BLT and BLC. The array 112 is segmented into P sub-arrays 113₀ to 113_{P-1}. Each sub-array 113 includes M columns and N/P rows of memory cells 114. The SRAM memory cells in a common column of each sub-array 113 are connected to each other through a local read bit line RBL.

The P local read bit lines RBL₀<x> to RBL_{P-1}<x> from the sub-arrays 113 for the column x in the array 112 are coupled, along with the common pair of complementary bit lines BLT<x> and BLC<x> for the column x in the array 112, to a column input/output (I/O) circuit 120(x). Here, x= 0 to M-1. A data input port (D) of the column I/O circuit 120 receives input data (user or weight data) from an input buffer circuit. This received input data is to be written to an SRAM memory cell 114 in the column through the pair of complementary bit lines BLT, BLC in response to assertion of a word line signal in a conventional memory access mode of operation. A data output port (Q) of the column I/O circuit 120 generates output data for storage in an output buffer circuit. This output data is read from an SRAM memory cell 114 in the column through the read bit line RBL in response to assertion of a read word line signal in the conventional memory access mode of operation. Additionally, the column I/O circuit 120 further includes P sub-array data output ports R₀ to R_{P-1} to generate output data. This output data is read from a memory cell 114 on the local read bit line RBL of the corresponding sub-array 113₀ to 113_{P-1}, respectively, in response to the simultaneous assertion of a plurality of read word line signals (one per sub-array 113) in a digital in-memory compute mode of operation. A digital computation processing circuit 123 performs digital computations on the output data from the sub-array data output ports R as a function of feature data. The feature data is received by the digital computation processing circuit 123 from the input buffer circuit. Additionally, or alternatively, the digital computation processing circuit 123 may receive input computation data from the input buffer circuit (this received computation data may, for example, relate to a sum and partial sum, partial product and/or partial compute performed by some other DIMC processing tile 80 in a pipelined processing operation). The digital computation processing circuit 123 functions to generate output computation data for the digital in-memory compute operation. This output computation data is stored in the output buffer circuit (and may, for example, relate to a sum and partial sum, partial product and/or partial compute to be further processed some other DIMC processing tile 80 in a pipelined processing operation).

The processing circuit 123 can implement computation logic for the digital signal processing in a number of ways including: full support of Boolean operations (XOR, XNOR, NAND, NOR, etc.) and vector operations depending on system and application needs; accumulation pipeline operations where vector multiplication is supported within the memory; and matrix vector multiplication pipeline operations where output from the memory as one vector for the multiply and accumulate (MAC) function. The processing circuit 123 can further function to perform decompression operations (for example, for the purpose of decompressing compressed weight data read from the memory 112. It will be noted that the processing circuit 123 is an integral part of the digital in-memory computation circuit 80.

The input/output buffer circuits support data interconnection of the DIMC processing tile 80 to the shared resource bus 72 through the router 88 of the DIMC circuit 70. The shared resource bus 72 enables transmission of weight data (WD) to the DIMC processing tile 80 of a given DIMC circuit 70 (through the input buffer circuit) where that weight data may be written through the D port in a data write mode to the memory 112 or passed to the digital computation logic 123 for use in performing an in-memory computation operation. The DIMC processing tile 80 of a given DIMC circuit 70 may further use the shared resource bus 72 in support of the transmission of weight data read from the memory 112 (through the output buffer circuit) to another DIMC circuit 70 (noting here that the read weight data may be sourced directly from the R< > ports for transmission or pass first through the digital computation logic 123 before transmission). The shared resource bus 72 also enables transmission of feature data (FD) to the DIMC processing tile 80 of a given DIMC circuit 70 (through the input buffer circuit) where that feature data is passed to the digital computation logic 123 for use in performing an in-memory computation operation. The shared resource bus 72 further enables transmission of input computation data (Comp) to the DIMC processing tile 80 (through the input buffer circuit) where that feature data is passed to the digital computation logic 123 for use in performing an in-memory computation operation. The DIMC processing tile 80 of a given DIMC circuit 70 may further use the shared resource bus 72 in support of the transmission of output computation data (Comp) from the DIMC processing tile 80 (through the output buffer circuit) to another DIMC circuit 70.

The computation logic for the digital signal processing performed by processing circuit 123 is closely integrated with the input/output circuits and the sub-array data output ports R₀ to R_{P-1} to support utilization of a wide (for example, P times) vector access. There are a number of figure of merit (FOM) benefits which accrue from this solution including: enabling multi-word access in a same cycle amortizes the common logic toggling power inside the SRAM when wide vector access occurs; the use of sub-arrays 113 can reduce bit line toggling power consumption (i.e., where P word lines are asserted in parallel to access P corresponding sub-arrays); support of both, with the opportunity to toggle between, the conventional memory access mode of operation and the digital in-memory compute mode of operation; and on/off current ratio on the same bitline improves which is a key concern when the circuitry is implemented using fully-depleted silicon-on-insulator (FDSOI) technology where forward body bias is aggressively used.

It will be noted that the DIMC processing tile 80 presents a conventional SRAM interface through the data input ports D and the data output ports Q in accordance with the conventional memory access mode of operation. In response to an applied memory address (Addr), the circuit supports read (via data output ports Q) and write (via data input ports D) access to a single row of memory cells 114 in the array 112 by the selected assertion of a single word line WL or RWL. The circuit further presents a sub-array processing interface through the sub-array data output ports R₀ to R_{P-1} in accordance with the digital in-memory compute mode of operation. In response to an applied memory address (Addr), the circuit supports simultaneous read (via data output ports R₀ to R_{P-1}) access to a single row of memory cells 114 in each of the sub-arrays 113₀ to 113_{P-1} by the simultaneous assertion of corresponding read word lines RWL. A single address can be decoded to select the plural word lines (one per sub-array 113) for assertion, or plural addresses can be decoded to select the plural word lines (one per sub-array 113) for assertion. The use plural sub-arrays 113 in this mode enables parallelism supporting very wide access for computation processing without sacrificing density. Advantageously, this digital in-memory compute mode of operation utilizes the resources of the conventional SRAM design with modified control, decoding and input/output circuits (as will be discussed herein in detail) to enable parallel access in the digital in-memory compute mode of operation with additional control to toggle between the conventional memory access mode of operation and the digital in-memory compute mode of operation as needed by the system application. This architecture brings parallelism with usage of the push rule bitcell thus enabling high density/compute density when configured for the in-memory compute mode of operation. Notwithstanding the foregoing, as noted above, usage of other bitcell types may instead be made.

A control circuit 119 controls mode operations of the circuitry within the DIMC processing tile 80 responsive to the logic state of a control signal IMC. When the control signal IMC is in a first logic state (for example, logic low), the circuit 80 operates in accordance with the conventional memory access mode of operation (for writing data from data input port D to the memory array or reading data from the memory array to data output port Q). Conversely, when the control signal IMC is in a second logic state (for example, logic high), the DIMC processing tile 80 operates in accordance with the digital in-memory compute mode of operation (for reading weight data from the memory array to the sub-array data output ports R).

When the DIMC processing tile 80 is operating in the conventional memory access mode of operation, the row decoder circuit 118 decodes a received address (Addr), selectively actuates only one word line WL (during write) or one read word line RWL (during read) for the whole array 112 with a word line signal pulse to access a corresponding single one of the rows of memory cells 114. In write, logic states of the data at the input ports D are written by the column I/O circuits 120 through the pairs of complementary bit lines BLT, BLC to the single row of memory cells coupled to the accessed word line WL. In read, the logic states of the data stored in the single row of memory cells coupled to the accessed word line WL are output from the read bit lines RBL to the column I/O circuits 120 for output at the data output ports Q.

When the DIMC processing tile 80 is operating in the digital in-memory compute mode of operation, the row decoder circuit 118 decodes a received address (Addr), selectively (and simultaneously) actuates one read word line RWL in each sub-array 113 in the memory array 112 with a word line signal pulse to access a corresponding row of memory cells 114 in each sub-array 113. The logic states of the weight data stored in the row of memory cells coupled to the accessed read word line RWL in each sub-array 113 are passed from the read bit lines RBL₀<x> to RBL_{P-1}<x> to the column I/O circuit 120 for output at the corresponding sub-array data output ports R₀ to R_{P-1}.

It will be noted that each sub-array 113 output can be considered as one subtensor/tensor for processing operations. Additionally, multiple sub-arrays 113 outputs can be grouped as a larger tensor. The grouping of sub-array outputs can be made across columns, across rows, or both. Such processing is supported through the configuration and operation of the processing circuit 123.

The architecture shown in Figure 4 presents a number of advantages for digital in-memory computation including: very wide vector access is enabled for supporting high dimensional tensor processing for an artificial neural network (ANN); hyper dimensional computing for artificial intelligence (AI) training and inference workloads is also supported; the computation is deterministic with a wide range of weight data and feature data precisions and number formats permitted for neural network applications (noting that this is a significant differentiation versus analog in-memory computation - which is limited to simplified signed/unsigned integer formats); and the solution is extendable to incorporate additional stochastic compute modes to gain area and power efficiency.

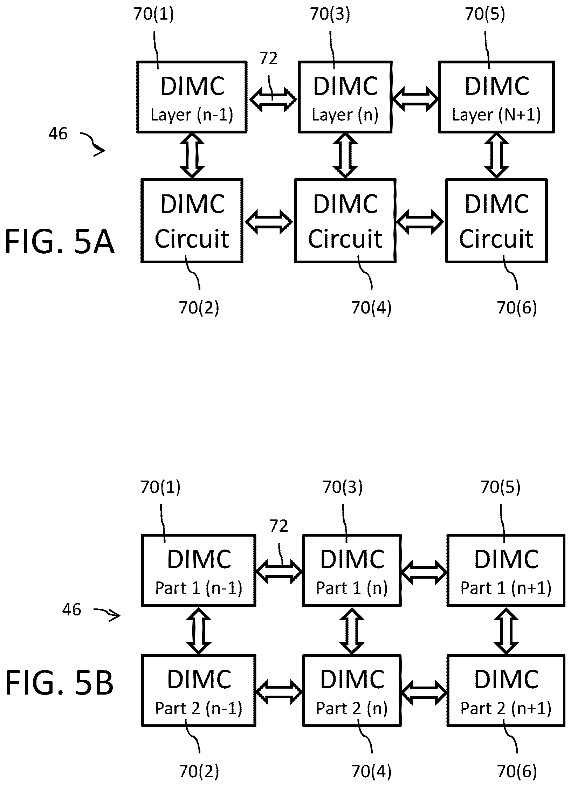

Reference is now made to Figures 5A-5B which illustrate neural network graph schedules for in-memory computation operations.

In Figure 5A, the tile cluster 46 includes a plurality of DIMC circuits 70 utilizing DIMC processing tiles 80. The neural network graph schedule for Figure 3A shows an example of a layer pipeline (which comprises a mapping of different layers of a given neural network onto different DIMC tiles; this mapping being managed by the compiler). The layer pipeline includes a layer (n-1) which utilizes the DIMC circuit 70(1) and its DIMC processing tile 80, a layer (n) which utilizes the DIMC circuit 70(3) and its DIMC processing tile 80, and a layer (n+1) which utilizes the DIMC circuit 70(5) and its DIMC processing tile 80. For the processing scenario where the output of layer (n-1) is provided as input to layer (n), there would be a communications interconnection over the shared resource bus 72 between the DIMC circuits 70(1) and 70(3). The computation output of the DIMC processing tile 80 would pass though the output buffer circuit and then the router 88 of the DIMC circuit 70(1), pass over the shared resource bus 72 through the router 88 of the DIMC circuit 70(3) to the input buffer circuit of the DIMC processing tile 80 for further process handling. For the processing scenario where the output of layer (n) is provided as input to layer (n+1), there would be a communications interconnection over the shared resource bus 72 between the DIMC circuits 70(3) and 70(5). The computation output of the DIMC processing tile 80 would pass though the output buffer circuit and then the router 88 of the DIMC circuit 70(3), pass over the shared resource bus 72 through the router 88 of the DIMC circuit 70(5) to the input buffer circuit of the DIMC processing tile 80 for further process handling. This layer pipeline processing operation may further implicate the provision of feature data to the DIMC processing tile 80 in each of the DIMC circuits 70(1), 70(3) and 70(5). This broadcast of feature data is made over the shared resource bus 72 where the feature data being distributed over bus 72 is routed by the router 88 of each DIMC circuit 70(1), 70(3) and 70(5) to the input buffer circuit of the connected DIMC processing tile 80 for application to the processing circuit 123 (which also receives weight data read from the memory 112 over the sub-array data output ports R₀ to R_{P-1}) where the computation processing is performed to generate output computation data for storage in the output buffer circuit.

In Figure 5B, the tile cluster 46 includes a plurality of IMC circuits 70, where IMC circuits 70(1), 70(2), 70(3), 70(4), 70(5) and 70(6) each utilize a DIMC processing tile 80. The neural network graph schedule for Figure 3B shows an example of a tensor pipeline (which is implemented in scenarios where a full unrolled tensor is not fully mappable in one tile, and is instead pipelined across multiple tiles; again this being managed by the compiler). The tensor pipeline includes a layer (n-1) which utilizes DIMC circuit 70(1) and its DIMC processing tile 80 for part 1 of the tensor operation and DIMC circuit 70(2) and its DIMC processing tile 80 for part 2 of the tensor operation, a layer (n) which utilizes DIMC circuit 70(3) and its DIMC processing tile 80 for part 1 of the tensor operation and DIMC circuit 70(4) and its DIMC processing tile 80 for part 2 of the tensor operation, and a layer (n+1) which utilizes DIMC circuit 70(5) and its DIMC processing tile 80 for part 1 of the tensor operation and DIMC circuit 70(6) and its DIMC processing tile 80 for part 2 of the tensor operation. For the processing scenario where the output of layer (n-1) is provided as input to layer (n), there would be a communications interconnection over the shared resource bus 72 between the DIMC circuits 70(1) and 70(3) for part 1 of the tensor operation and between the DIMC circuits 70(2) and 70(4) for part 2 of the tensor operation. The computation output of the DIMC processing tile 80 for part 1 of the tensor operation would pass though the output buffer circuit and then the router 88 of the DIMC circuit 70(1), pass over the shared resource bus 72 through the router 88 of the DIMC circuit 70(3) to the input buffer circuit of the DIMC processing tile 80 for further process handling. Likewise, the computation output of the DIMC processing tile 80 for part 2 of the tensor operation would pass though the output buffer circuit and then the router 88 of the DIMC circuit 70(2), pass over the shared resource bus 72 through the router 88 of the DIMC circuit 70(4) to the input buffer circuit of the DIMC processing tile 80 for further process handling. For the processing scenario where the output of layer (n-1) is provided as input to layer (n), there would be a communications interconnection over shared resource bus 72 between the DIMC circuits 70(3) and 70(5) for part 1 of the tensor operation and between the DIMC circuits 70(4) and 70(6) for part 2 of the tensor operation. The computation output of the DIMC processing tile 80 for part 1 of the tensor operation would pass though the output buffer circuit and then the router 88 of the DIMC circuit 70(3), pass over the shared resource bus 72 through the router 88 of the DIMC circuit 70(5) to the input buffer circuit of the DIMC processing tile 80 for further process handling. Likewise, the computation output of the DIMC processing tile 80 for part 2 of the tensor operation would pass though the output buffer circuit and then the router 88 of the DIMC circuit 70(4), pass over the shared resource bus 72 through the router 88 of the DIMC circuit 70(6) to the input buffer circuit of the DIMC processing tile 80 for further process handling. This tensor pipeline processing operation may further implicate the provision of feature data to the DIMC processing tile 80 in each of the DIMC circuits 70(1), 70(2), 70(3), 70(4), 70(5) and 70(6). This broadcast of feature data is made over the shared resource bus 72 where the feature data for part 1 of the tensor operation is distributed over bus 72 and routed by the router 88 of each DIMC circuit 70(1), 70(3) and 70(5) to the input buffer circuit of the connected DIMC processing tile 80 for application to the processing circuit 123 (which also receives weight data read from the memory 112 over the sub-array data output ports R₀ to R_{P-1}) where the computation processing is performed to generate output computation data for storage in the output buffer circuit. Similarly, the feature data for part 2 of the tensor operation is distributed over bus 72 and routed by the router 88 of each DIMC circuit 70(2), 70(4) and 70(6) to the input buffer circuit of the connected DIMC processing tile 80 for application to the processing circuit 123 (which also receives weight data read from the memory 112 over the sub-array data output ports R₀ to R_{P-1}) where the computation processing is performed to generate output computation data for storage in the output buffer circuit.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. A circuit, comprising:
a first in-memory computation (IMC) circuit comprising a first IMC processing tile coupled for data communication to a first interface circuit;
a second IMC circuit comprising a second IMC processing tile coupled for data communication to a second interface circuit;
a shared resource bus connecting the first interface circuit to the second interface circuit to support data communications among and between the first and second IMC processing tiles;
wherein the data communications over the shared resource bus include transmission of one or more of:
feature data for in-memory computation operations provided to the first and second IMC processing tiles;
weight data for in-memory computation operations provided to the first and second IMC processing tiles; and
output computation data generated by execution of the in-memory computation operation by one of the first and second IMC processing tiles and provided as input computation data to the other of the first and second IMC processing tiles.

2. The circuit of claim 1, wherein each of the first and second IMC processing tiles includes an input buffer circuit configured to receive feature data, weight data or input computation data of the data communication transmitted over the shared resource bus.

3. The circuit of claim 2, wherein the IMC processing tile comprises a processing circuit configured to receive the feature data from the input buffer circuit and weight data read from a memory of the IMC processing tile, the processing circuit configured to generate output computation data for storage in an output buffer circuit.

4. The circuit of claim 3, wherein weight data from the input buffer circuit is written to the memory of the IMC processing tile.

5. The circuit of claim 2, wherein the IMC processing tile comprises a processing circuit configured to receive the input computation data from the input buffer circuit, the processing circuit configured to generate output computation data for storage in an output buffer circuit.

6. The circuit of claim 1, wherein each of the first and second IMC processing tiles includes an output buffer circuit configured to receive weight data or output computation data for data communication transmission over the shared resource bus.

7. The circuit of claim 6, wherein the IMC processing tile comprises a processing circuit configured to receive feature data and receive weight data read from a memory of the IMC processing tile, the processing circuit configured to generate output computation data for storage in the output buffer circuit.

8. The circuit of claim 6, wherein weight data read from a memory of the IMC processing tile is output for storage in the output buffer circuit

9. The circuit of claim 1, wherein the data communications over the shared resource bus include a transmission to the first and second IMC circuits of feature data for in-memory computation operations performed by the first and second IMC processing tiles.

10. The circuit of claim 1, wherein the data communications over the shared resource bus include a transmission to the first and second IMC circuits of weight data for in-memory computation operations performed by the first and second IMC processing tiles.

11. The circuit of claim 1, wherein the data communications over the shared resource bus include a transmission from the first IMC circuit to the second IMC circuit of computation data generated by the first IMC processing tile for further processing by the second IMC processing tile.

12. The circuit of claim 1, wherein the first IMC circuit includes a decompressor logic configured to decompress compressed weight data for in-memory computation operations, and wherein the data communications over the shared resource bus is a transmission from the first IMC circuit to the second IMC circuit of the decompressed weight data.

13. The circuit of claim 1, wherein the first IMC processing tile of the first IMC circuit includes a shared compute logic configured to receive data over the shared resource bus from the second IMC processing tile and perform computation operations on the received data.

14. The circuit of claim 1, wherein the first IMC processing tile of the first IMC circuit includes a shared compute logic configured to generate output computation data communicated from the first IMC processing tile to the second IMC processing tile over the shared resource bus.

15. The circuit of claim 1, wherein the first and second IMC circuits are layers in a layered pipeline processing operation.

16. The circuit of claim 1, wherein the first and second IMC circuits are parts of layers in a tensor pipeline processing operation.

17. The circuit of claim 1, wherein each of the first and second IMC circuits includes a router circuit coupled to the shared resource bus and configured for packet switch operation to route data communications between the interface and the IMC processing tile.

18. The circuit of claim 1, wherein each of the first and second IMC circuits includes a router circuit coupled to the shared resource bus and configured for circuit switch operation to route data communications between the interface and the IMC processing tile.
